# EUROPÄISCHE PATENTSCHRIFT

(11) **EP 1 727 997 B1**
(45) Veröffentlichungstag und Bekanntmachung des Hinweises auf die Patenterteilung: **12.12.2012**
(21) Anmeldenummer: 05730899.1
(22) Anmeldetag: 18.03.2005
(51) Int. Cl.: F16C 33/38

(54) **KÄFIG FÜR SCHRÄGKUGELLAGER**
CAGE FOR TAPERED BALL BEARINGS
CAGE DESTINEE A UN ROULEMENT A BILLES A PORTEE OBLIQUE

(30) Priorität: 20.03.2004 DE 102004013804
(43) Veröffentlichungstag der Anmeldung: 06.12.2006
(73) Patentinhaber: Schaeffler Technologies AG & Co. KG, 91074 Herzogenaurach (DE)
(72) Erfinder: HÄPP, Alexander, 97461 Lendershausen (DE)
(86) Internationale Anmeldenummer: PCT/DE2005/000516
(87) Internationale Veröffentlichungsnummer: WO 2005/090810

(56) Entgegenhaltungen:
- DE-A1- 3 917 128
- DE-U1- 9 412 260
- US-A1- 2001 036 329

## Beschreibung

### Gebiet der Erfindung

Die Erfindung betrifft einen Käfig für Schrägkugellager mit umfangsseitig um eine Rotationsachse des Käfigs zueinander benachbarten Kugeltaschen, wobei die Kugeltaschen umfangsseitig durch Stege begrenzt sind.

### Hintergrund der Erfindung

Ein derartiger Käfig ist in DE 3706013 A1 beschrieben. Derartige Käfige werden aus Kunststoff hergestellt. Typische Beispiele zur Fertigung derartiger Käfige herangezogener Werkstoffe sind mit Glas oder mit Kohlefasern verstärkte Polyamide (z.B. PA66/GF) .Der Käfig weist zwei durch Stege miteinander verbundene Seitenringe auf. Einer der Seitenringe ist auf der einen Seite des Käfigs oberhalb und ein anderer der Seitenringe unterhalb des Teilkreises angeordnet. Die Seitenringe an Käfigen der gattungsbildenden Art sind auch unter Seitenborde bekannt. Die Seitenborde des Käfigs sind ausgehend von den Stirnseiten mit Ringnuten versehen.

Besonders schwierig sind Käfige der betrachtenden Gattung zu gestalten, wenn diese zusätzlich Haltenasen aufweisen. Diese Haltenasen sind in der Regel an einem der Seitenborde ausgebildet und greifen in eine entsprechende Umfangsnut eines der Lagerringe des Schrägkugellagers ein. Über die Haltenasen sind die Käfige zusammen mit den Kugeln und dem entsprechenden Lagerring zu einer in sich selbst haltenden Baueinheit vormontiert, aus der Kugeln während der Montage in den anderen Lagerring des Schrägkugellagers nicht herausfallen können. Derartige Haltenasen sind auch für eine axiale Wegbegrenzung des Käfigs in einem Lager vorgesehen.

Bei der Montage des Käfigs auf den Lagerring federn die Haltenasen solange entweder elastisch ein oder auf, bis die Haltenasen in eine entsprechende Nut des Lagerringes einschnappen. Die Wandstärken im Bereich des Überganges der Haltenasen in den Käfig müssen deshalb ausreichend stabil dimensioniert sein, um sich bei der Montage des Käfigs auf oder in den Lagerring nicht bleibend plastisch zu verformen. Andererseits müssen die Haltenasen elastisch genug sein, um die Montage des Käfigs in das Lager nicht zu erschweren und um Beschädigungen des Käfigs oder der Haltenasen zu verhindern. An sich sind deshalb Käfige, deren Borde relativ große Querschnitte aufweisen, für die Stabilität des Käfigs von Vorteil. Jedoch sind die Montagekräfte zum Aufschieben z.B. auf einen Innenring und dabei Auffedern der Haltenasen relativ hoch. Außerdem sind die Haltenasen aufgrund der hohen Montagekräfte leicht zu beschädigen.

Die Ringnuten sind nach DE 3706013 A1 in den Seitenborden vorgesehen, um die Wanddicken der Borde möglichst dünnwandig auszubilden und um in allen Bereichen der Seitenborde gleichmäßige Wanddicken zu erzielen. Gleichmäßige Wanddicken und Wanddickenübergänge werden beim Spritzen von Kunststoffteilen angestrebt, um Unterbrechungen des Materialflusses/Blasen vom Käfigwerkstoff in den Kavitäten der Spritzwerkzeuge am Übergang von dicken zu dünnen Querschnitten zu vermeiden. Außerdem werden durch gleichmäßige Wanddicken gleiche Abkühlgeschwindigkeiten in allen Bereichen des Werkstückes erzielt. Fehler aus ungewollten Schwächungen in dünnen Wandbereichen werden auch durch möglichst kurze Fließstrecken in Kavitäten mit relativ geringern Spritzquerschnitt vermieden.

Der Dünnwandigkeit durch die Anforderungen an eine hohe Betriebsfestigkeit des Käfigs Grenzen gesetzt. Wenn die Querschnitte an derartigen Käfigen zu gering sind, ist zu befürchten, dass die Käfige mit den anfangs erwähnten Haltenasen bei der Montage in das Lager brechen oder bleibende Verformungen aufweisen. Im Übrigen sind dünnwandige Kunststoffteile nach dem Entformen aus dem Werkzeug äußerst instabil und verlieren häufig beim danach weiterfolgenden Abkühlen und während der Lagerung ihre bestimmungsgemäße Form bzw. Geometrie.

Aus DE 3917128 A1 ist ein einteiliger Doppelkammkäfig für zweireihige Kugellager bekannt, der mittels Haltenasen gegen axiale Beeinflussung gesichert ist. Durch eine Schrägstellung der Haltenasen wird eine leichte Montage möglich.

Aus US 2001/0036329 A1 ist ein Kugellagerkäfig bekannt, der über so genannte Clips mit einem weiteren Käfig verbindbar ist. Damit wird die räumliche Orientierung der Wälzkörper bzw. der Käfige zueinander fixiert, um ein asynchrones Umlaufen beim Betrieb zu vermeiden.

Aus DE 94 12 260 U1 geht ein Käfig für ein Schrägkugellager hervor, nach dem Oberbegriff des Anspruchs 1. Er weist in einer Nut des Innenrings einschnappende Haltenasen auf, die den Käfig in axialer Richtung sichern. Benachbarte Haltenasen weisen einander zugewandte Flanken auf, die parallel zueinander verlaufen.

### Zusammenfassung der Erfindung

Die Aufgabe der Erfindung ist es daher, einen Käfig zu schaffen, der den vorgenannten und sich teils entgegenstehenden Forderungen an die Herstellbarkeit, an kostengünstige Herstellung und an die Funktion optimal gerecht wird.

Diese Aufgabe ist gemäß dem Gegenstand des Anspruches 1 gelöst. Die Kugeltaschen dieses Käfigs sind umfangsseitig durch zumindest quer zur Umfangsrichtung des Käfigs ausgerichtete Stege und in wenigstens einer axialen Richtung des Käfigs jeweils von einer Seitenwand mit annähernd gleichmäßiger Wanddicke begrenzt. Jede der Seitenwände verbindet zwei aneinander gegenüberliegende Stege umfangsseitig miteinander.

Die Erfindung sieht einen Käfig für Schrägkugellager mit federnd nachgiebig gestalteten Haltenasen vor. Die Haltenasen sind für das axiale Sichern des Käfigs in einer Haltenut des Innenringes bzw. des Außenringes vorgesehen. Jede der Haltenasen geht aus einer der Seitenwände hervor und ist umfangsseitig zu weiteren der Haltenasen benachbart. Die Haltenasen gehen vorzugsweise zunächst radial von den Seitenwänden ab, und weisen dann schräg in Richtung der Rotationsachse.

Jede der Haltenasen ist dabei umfangsseitig von einer weiteren der Haltenasen durch eine Umfangslücke getrennt. Die Umfangslücke gewandten und an den Umfangslücken einander gegenüberliegende Flanken an den Haltenasen verlaufen zueinander geneigt. Der Querschnitt der Haltenasen ist insgesamt reduziert und damit sind die Haltenasen in sich elastischer. Die Montage ist vereinfacht. Seitenwände, Stege usw. können aus Gesichtspunkten der Materialökonomie dünnwandig gestaltet werden.

Eine Ausgestaltung der Erfindung sieht vor, dass die umfangsseitig einander zugewandten Flanken geradlinig verlaufen und dabei um einem Winkel zu einer gedachten sowie mit der Rotationsachse gleichgerichteten Ebene geneigt sind. Die Flanken sind wahlweise zur Umfangslücke gewandte ebene Flächen oder Geraden, wobei die Flächen um einem Winkel von 30 ° zu einer gedachten sowie mit der Rotationsachse gleichgerichteten Ebene geneigt sind. Vorzugsweise sind die Flanken so zueinander geneigt, dass der umfangsseitige Abstand einander an einer Umfangslücke zugewandter der Flanken von benachbarten Haltenasen in Richtung der Rotationsachse zunimmt.

Mit einer weiteren Ausgestaltung der Erfindung ist der Übergang der Haltenasen an die Seitenwände elastisch gestaltet. Dazu ist jeweils an dem Übergang von der Seitenwand zur Haltenase eine Nut in dem Material des Käfigs ausgebildet. Die Nut ist umfangsseitig oder tangential zur Rotationsachse ausgerichtet. Die Wanddicke der Seitenwand ist durch die in axiale Richtung offene Nut reduziert. Dabei ist der Querschnitt der Nut in einem Längsschnitt des Käfigs entlang der Rotationsachse durch einen Radius beschrieben. Mit der Nut ist eine elastische Sollbiegestelle zwischen dem Käfig und der Haltenase geschaffen, die die Montage erleichtert und die den Käfig vor Beschädigungen schützt.

Durch die Gestaltung der Haltenasen und deren Übergang in die Seitenwände gemäß Erfindung kann der Käfig hinsichtlich des Materialverbrauches bei seiner Herstellung optimiert werden. Vorzugsweise sind deshalb die Seitenwände von den Stegen aus zumindest in die axiale Richtung ausgewölbt und stehen dabei in die axiale Richtung von den Stegen ab. Dabei sind die Außenkonturen der Seitenwände von umfangsseitig aufeinander folgenden Taschen mit zunehmendem Abstand in die axiale Richtung vom Steg aus zunehmend umfangsseitig voneinander frei entfernt, so dass der Käfig zumindest stirnseitig mit Lücken versehen ist, die sich teilweise zwischen den Taschen in Richtung der Stege erstrecken. Der axial hervorstehende Umkehrpunkt der Wölbungen steht axial am weitesten aus dem Käfig in die axiale Richtung hervor.

Jeweils eine Rippe geht in die axiale Richtung von jeweils einem der Stege aus und verbindet zwei der Seitenwände von umfangsseitig aufeinander folgenden Taschen miteinander. Jede der Rippen steht dabei in die axiale Richtung von dem Steg höchstens so weit ab, wie die Seitenwände in die axiale Richtung von dem Steg aus in die axiale Richtung am weitesten hervorstehen, aber nicht weiter.

Zumindest einer der üblicherweise an Käfigen der gattungsbildenden Art beidseitig ausgebildeten und relativ dickwandigen Seitenborde entfällt an dem Käfig gemäß Erfindung. Stattdessen ist der Käfig an zumindest einer Stirnseite zwischen den ausgewölbten Seitenwänden der Taschen jeweils mit einer umfangsseitig oder tangential ausgerichteten Rippe zwischen den einzelnen aufeinander folgenden Taschen versehen. Für die Herstellung des Käfigs wird weniger Material eingesetzt und die funktionsbedingte Festigkeit ist über den Verbund von Rippen und Seitenwänden gewährleistet.

Umfangsseitig ausgerichtete Rippen zwischen den Seitenwänden sind vorzugsweise so gekrümmt, dass alle beliebigen Punkte einer der Rotationsachse zugewandten Rippenfläche radial gleich weit von der Rotationsachse des Käfigs entfernt sind. Durch die axial auswärts gewölbten Seitenwände verbreitert sich die Rippenfläche in Umfangsrichtung mit zunehmendem axialen Abstand von dem jeweiligen Steg. Dabei ist jede der Lücken vorzugsweise radial zur Rotationsachse hin von einer der Rippen begrenzt. Die Rippen gehen so axial in den Steg über, dass der größte radiale Abstand der Rippen von der Rotationsachse höchstens genauso groß ist, wie der kleinste radiale Abstand eines jeden der Stege von der Rotationsachse.

Der Käfig weist wahlweise einen Seitenbord auf, der die Taschen entgegengesetzt zu der Stirnseite begrenzt, an der die Rippen ausgebildet sind, oder ist an beiden Stirnseiten gemäß Erfindung gestaltet. Da üblicherweise bei Käfigen für Schrägkugellager der gattungsbildenden Art einer der Seitenborde radial unterhalb und einer der Seitenborde radial oberhalb des Teilkreises der Kugeln verläuft, ergibt sich für einen Käfig gemäß Erfindung, dass der kleinste radiale Abstand des Seitenbordes zur Rotationsachse des Käfigs größer ist, als der größte radiale Abstand der Seitenwände zur Rotationsachse.

Weitere Ausgestaltungen der Erfindung sind im Abschnitt detaillierte Beschreibung der Zeichnungen beschrieben.

### Kurze Beschreibung der Zeichnungen

Erfindung wird nachfolgend anhand eines Ausführungsbeispieles näher erläutert. Es zeigen im einzelnen:
- Figur 1: die Gesamtansicht eines Ausführungsbeispieles eines erfindungsgemäßen Käfigs,
- Figur 2: die Frontalansicht des Käfigs aus Figur 1 mit Pfeilrichtung,
- Figur 3: eine Seitenansicht des Käfigs,
- Figur 4: einen Längsschnitt durch den Käfig entlang der Linie IV - IV nach Figur 2,
- Figur 5: eine Teilansicht eines Schrägkugellagers mit dem Käfig nach Figur 1, im Längsschnitt dargestellt und
- Figur 6: das Detail Z aus Figur 2 stark vergrößert.

### Detaillierte Beschreibung der Zeichnungen

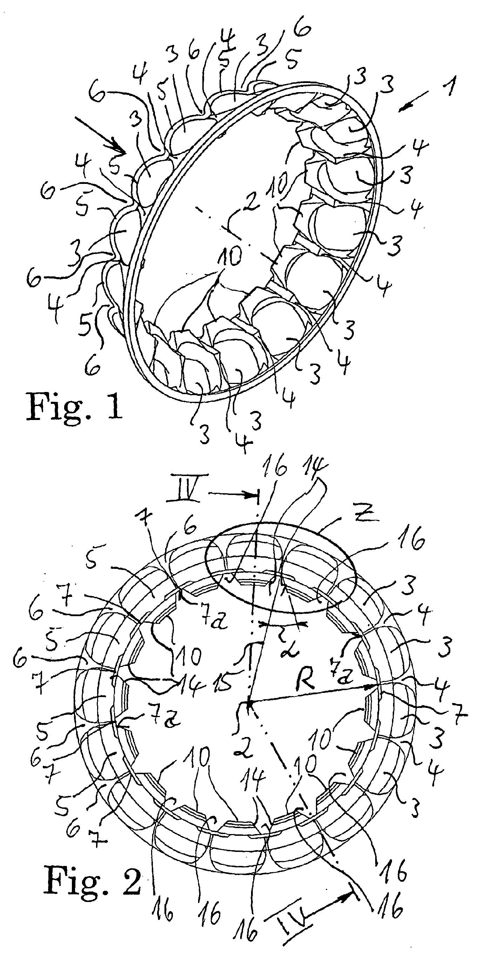

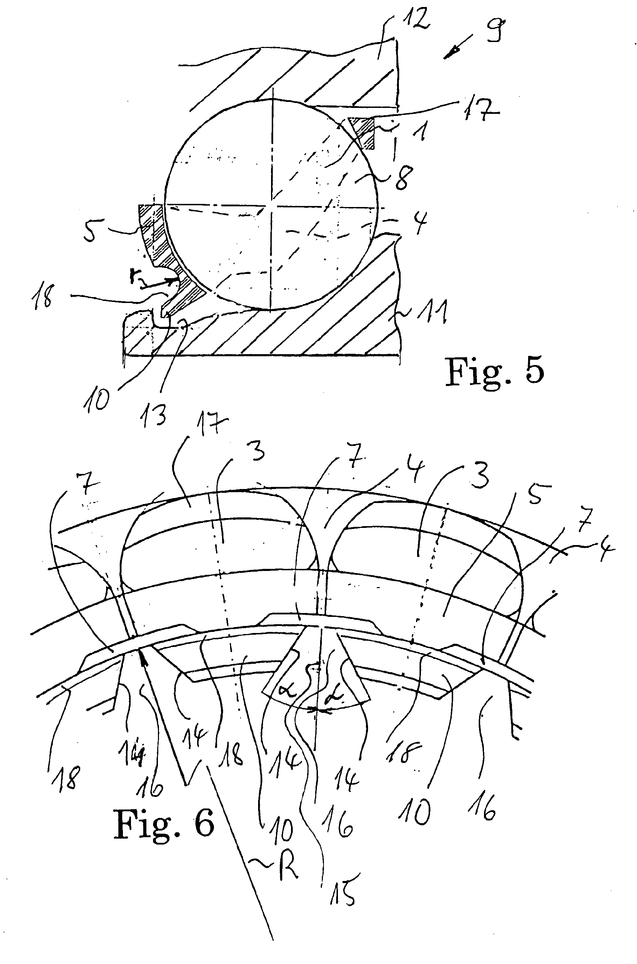

Figuren 1 bis 3 zeigen ein Ausführungsbeispiel eines erfindungsgemäßen Kä-figs 1. Der Käfig weist umfangsseitig um seine Rotationsachse 2 zueinander mit gleichmäßiger Teilung benachbarte Kugeltaschen 3 auf. In jeder einzelnen der Kugeltaschen 3 ist eine Kugel 8 geführt. In Figur 5, einer geschnittenen Teilansicht eines Schrägkugellagers 9, ist der radial zwischen einem Innenring 11 und einem Außenring 12 angeordnete Käfig 1 mit Kugeln 8 dargestellt. Die Kugeltaschen 3 sind durch quer zur Umfangsrichtung verlaufende Stege 4 begrenzt. An einer Stirnseite ist der Käfig 1 von Seitenwänden 5 mit annähernd gleichmäßiger Wanddicke begrenzt.

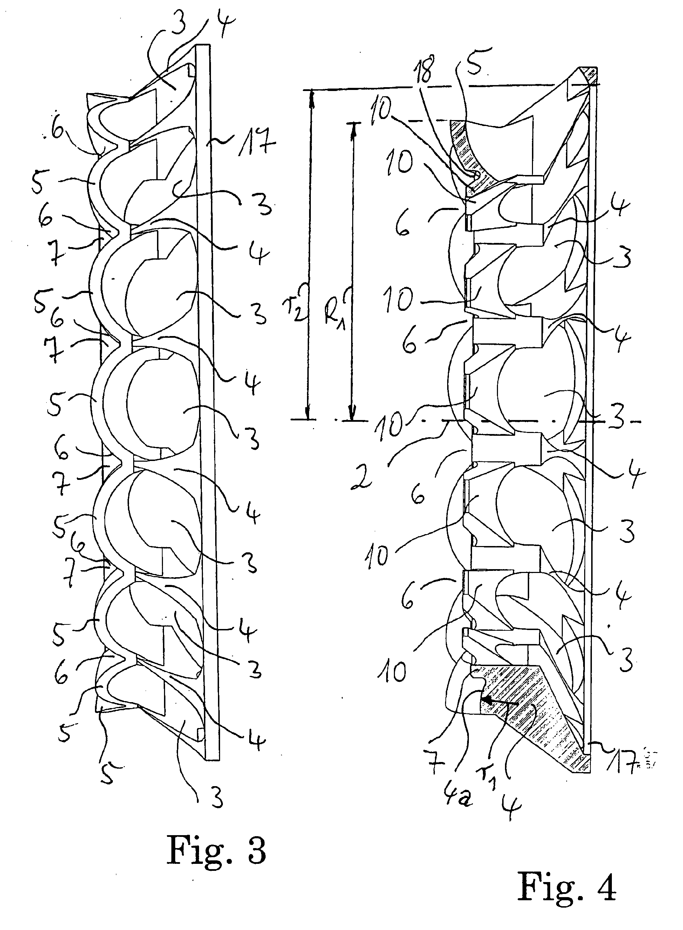

Die Seitenwände 5 sind von den Stegen 4 aus in die axiale Richtung ausgewölbt, so dass stirnseitig des Käfigs 1 axiale Lücken 6 ausgebildet sind. Die Lücken 6 sind radiale Richtung der Rotationsachse 2 von jeweils einer Rippe 7 begrenzt. Die Rippen 7 sind in Umfangsrichtung ausgerichtet und verlaufen in die Umfangsrichtungen gekrümmt (Figur 2 und 6). Dabei sind die Krümmungen der Rippen 7 durch einen gemeinsamen Radius R beschrieben, der von der Rotationsachse 2 ausgeht. Alle beliebigen Punkte der zur Rotationsachse 2 gewandten Rippenfläche 7a sind um den Radius R zur Rotationsachse 2 beabstandet und verbreitern sich von den Stegen 4 aus in die axiale Richtung Wie aus Figur 3 ersichtlich ist, steht jede der Rippen 7 in die axiale Richtung von dem jeweiligen Steg 4 nicht so weit ab, wie die Seitenwände 5 in die axiale Richtung von dem Steg 4 aus axial aus dem Käfig 1 hervorstehen.

Käfig 1 weist federnd nachgiebige Haltenasen 10 auf. Die Haltenasen 10 greifen radial in eine Ringnut 13 des Innenringes 11 ein. Mittels der Haltenasen 10 ist der Käfig 1 axial mit Spiel an dem Innenring 11 gesichert. In Umfangsrichtung gewandten Flanken 14 an den Haltenasen 10 verlaufen zueinander geneigt (Figur 2, Figur 6). Dabei sind die Flanken 14 in diesem Fall so zueinander geneigt, dass der Abstand der jeweils durch eine Umfangslücke 16 zueinander beanstandeten Haltenasen 10 in Richtung der Rotationsachse 2 zunimmt. Die Flanken 14, vorzugsweise ebene Flächen oder gerade Kanten, sind um einen Winkel α zu einer gedachten, mit der Rotationsachse 2 gleichgerichteten Ebene 15 geneigt. α weist vorzugsweise eine Größe von 30° auf.

Die Dicke der Seitenwände ist durch eine Nut 18 zwischen jeder der Seitenwand 5 und einer der Haltenasen 10 reduziert. Die Nut 18 ist in dem Längsschnitt nach Figur 5 durch einen Radius r beschrieben. Jede der Nuten 18 ist radial nach außen anteilig von einer der Seitenwände 5 und von zwei in Umfangsrichtung durch eine der Seitenwände 5 voneinander getrennte der Rippen 7 begrenzt (Figur 6). Dabei sind in Umfangsrichtung zueinander benachbarte der Nuten 18 paarweise radial nach außen gemeinsam von mindestens einer der Rippen 7 begrenzt. Die Haltenasen 10 stehen in die axiale Richtung nicht soweit hervor, wie die Seitenwände 5 von den Stegen 4 aus in die axiale Richtung ausgewölbt sind.

Die Kugeltaschen 3 sind in die entgegen gesetzte Richtung zu den Seitenwänden 5 mittels eines Seitenbordes 17 begrenzt. Der Querschnitt des Seitenbordes 17 in axiale Richtungen ist annähernd der Dicke der Seitenwände 5 angepasst (Figur 5). Wie aus Figur 4 ersichtlich ist, erstrecken sich die Stege von dem Seitenbord 17 aus zunächst geneigt in Richtung der Rotationsachse 2 und verlaufen dann in axiale Richtung. Die Stirnseite 4a der Stege 4 in den Lücken 6 und dabei über den Rippen 7 ist durch einen Radius r₁ beschrieben. Der kleinste durch den Radius r₂ beschriebene radiale Abstand des Seitenbordes 17 zur Rotationsachse ist größer als der größte durch den Radius R₁ beschriebene radiale Abstand der Seitenwände 5 zur Rotationsachse.

### Bezugszeichen

- 1: Käfig
- 2: Rotationsachse
- 3: Kugeltasche
- 4: Steg
- 4a: Stirnseite
- 5: Seitenwand
- 6: Lücke
- 7: Rippe
- 7a: Rippenfläche
- 8: Kugel
- 9: Schrägkugellager
- 10: Haltenase
- 11: Innenring
- 12: Außenring
- 13: Ringnut
- 14: Flanken
- 15: Ebene
- 16: Umfangslücke
- 17: Seitenbord
- 18: Nut

## Patentansprüche

1. Käfig (1) für Schrägkugellager (9) mit umfangsseitig um eine Rotationsachse (2) des Käfigs (1) zueinander benachbarten Kugeltaschen (3), die umfangsseitig durch Stege (4) begrenzt sind, und der Käfig (1) federnd nachgiebige Haltenasen (10) für das axiale Sichern des Käfigs (1) in einer Ringnut (13) eines Innenringes (11) aufweist, wobei jede der Haltenasen (10) aus einer der Seitenwände (5) hervorgeht, **dadurch gekennzeichnet dass** umfangsseitige Flanken (14) der benachbarten Haltenasen (10) zueinander geneigt verlaufen und dass der Käfig (1) an einer Stirnseite (4a) zwischen den ausgewölbten Seltenwänden (5) benachbarter Kugeltaschen (3) mit jeweils einer umfangsseitig ausgerichteten Rippe (7) versehen ist, wobei die Rippen (7) zusammen mit den Seitenwänden (5) einen Festigkeit gewährleistenden Verbund bilden.

2. Käfig nach Anspruch 1, bei dem die umfangsseitig einander zugewandten Flanken (14) zu einer gedachten von der Rotationsachse ausgehenden sowie mit der Rotationsachse (2) gleichgerichteten Ebene (15) geneigt sind.

3. Käfig nach Anspruch 1, bei dem die Flanken (14) zur Umfangslücke (16) gewandte ebene Flächen sind, wobei die Flächen um einem Winkel von 30 ° zu einer gedachten von der Rotationsachse (2) ausgehenden sowie mit der Rotationsachse (2) gleichgerichteten Ebene (15) geneigt sind.

4. Käfig nach Anspruch 1, 2 oder 3, bei dem der umfangseitige Abstand einander an einer Umfangslücke (16) zugewandter Flanken (14) von zueinander benachbarten Haltenasen (10) in Richtung der Rotationsachse (2) zunimmt.

5. Käfig nach Anspruch 1, bei dem die Kugeltaschen (3) in wenigstens eine axiale Richtung des Käfigs (1) jeweils von einer Seitenwand (5) mit annähernd gleichmäßiger Wanddicke begrenzt sind.

6. Käfig nach Anspruch 5, bei dem die Seitenwände (5) von den Stegen (4) aus zumindest in die axiale Richtung ausgewölbt sind und somit Lücken (6) zwischen den über den Steg (4) hinaus stehenden sowie umfangsseitig benachbarten Seitenwänden (5) ausgebildet sind.

7. Käfig nach Anspruch 6. bei dem die Halternasen (10) höchstens soweit in die axiale Richtung hervorstehen, wie die Seitenwände (5) von dem Steg (4) aus in die axiale Richtung am weitesten hervorstehen.

8. Käfig nach Anspruch 6. mit Nuten (18), wobei die Wanddicke der Seitenwände (5) mittels jeweils einer der Nuten (18) reduziert ist und dabei jede der Nuten (18) in Richtung der Rotationsachse (2) von einer der Haltenasen (10) und seitens der Kugeltasche (3) von einer der Seitenwände (5) begrenzt ist.

9. Käfig nach Anspruch 8, bei dem die Nut (18), in einem Längsschnitt entlang der Rotationsachse (2) des Käfigs (1) betrachtet, durch einen Radius beschrieben ist.

10. Käfig nach Anspruch 6, mit Rippen (7) in Umfangsrichtung zwischen zwei den Seitenwänden (5), wobei jede der Rippen (7) in die axiale Richtung von jeweils einem der Stege (4) ausgeht und jeweils zwei der Seitenwände (5) umfangsseitig miteinander verbindet.

11. Käfig nach Anspruch 10, bei dem jede der Nuten (1B) radial nach außen anteilig von einer der Seitenwände (5) sowie von zwei in Umfangsrichtung mittels einer der Seitenwände (5) voneinander getrennten der Rippen (7) begrenzt ist.

12. Käfig nach Anspruch 10, bei dem die Nuten (18) paarweise radial nach außen gemeinsam von mindestens einer der Rippen (7) teilweise begrenzt sind.

13. Käfig nach Anspruch 10, bei dem jede der Umfangslücken (16) radial nach außen teilweise von einem der Stege (4) und von einer der Rippen (7) begrenzt ist.

14. Käfig nach Anspruch 1, mit einem umfangsseitig umlaufenden Seitenbord, wobei der Seitenbord (17) die Kugeltaschen (3) entgegengesetzt zu der axialen Richtung begrenzt.

15. Käfig nach Anspruch 14, bei dem der kleinste radiale Abstand des Seitenbordes (17) zur Rotationsachse (2) des Käfigs (1) größer ist, als der größte radiale Abstand der Seitenwände (5) zur Rotationsachse (2).

## Claims

1. Cage (1) for tapered ball bearings (9) having ball pockets (3) which are adjacent to one another on the circumferential side about a rotational axis (2) of the cage (1), which ball pockets (3) are delimited on the circumferential side by webs (4), and the cage (1) has retaining lugs (10) which are resilient in a sprung manner for axially securing the cage (1) in an annular groove (13) of an inner ring (11), each of the retaining lugs (10) protruding from one of the side walls (5), **characterized in that** circumferential flanks (14) of the adjacent retaining lugs (10) extend in an inclined manner with respect to one another, and **in that** the cage (1) is provided with in each case one rib (7), which is oriented on the circumferential side, on an end side (4a) between the outwardly curved side walls (5) of adjacent ball pockets (3), the ribs (7) forming, together with the side walls (5), a composite which ensures strength.

2. Cage according to Claim 1, in which the flanks (14) which face one another on the circumferential side are inclined with respect to an imaginary plane (15) which emanates from the rotational axis and is aligned with the rotational axis (2).

3. Cage according to Claim 1, in which the flanks (14) are flat surfaces which face the circumferential gap (16), the surfaces being inclined at an angle of 30° with respect to an imaginary plane (15) which emanates from the rotational axis (2) and is aligned with the rotational axis (2).

4. Cage according to Claim 1, 2 or 3, in which the circumferential spacing between flanks (14), which face one another at a circumferential gap (16), of mutually adjacent retaining lugs (10) increases in the direction of the rotational axis (2).

5. Cage according to Claim 1, in which the ball pockets (3) are delimited in at least one axial direction of the cage (1) in each case by a side wall (5) having an approximately uniform wall thickness.

6. Cage according to Claim 5, in which the side walls (5) are arched, starting from the webs (4), at least in the axial direction and gaps (6) are therefore formed between the side walls (5) which protrude beyond the web (4) and are adjacent on the circumferential side.

7. Cage according to Claim 6, in which the retaining lugs (10) protrude in the axial direction at most to the extent that the side walls (5) protrude at most in the axial direction starting from the web (4).

8. Cage according to Claim 6, having grooves (18), the wall thickness of the side walls (5) being reduced by in each case one of the grooves (18) and each of the grooves (18) being delimited here in the direction of the rotational axis (2) by one of the retaining lugs (10) and, on the side of the ball pockets (3), by one of the side walls (5).

9. Cage according to Claim 8, in which the groove (18), as viewed in a longitudinal section along the rotational axis (2) of the cage (1), is described by a radius.

10. Cage according to Claim 6, having ribs (7) in the circumferential direction between two side walls (5), each of the ribs (7) emanating in the axial direction from in each case one of the webs (4) and connecting in each case two of the side walls (5) to one another on the circumferential side.

11. Cage according to Claim 10, in which each of the grooves (18) is delimited radially to the outside proportionally by one of the side walls (5) and by two of the ribs (7) which are separated from one another in the circumferential direction by means of one of the side walls (5).

12. Cage according to Claim 10, in which the grooves (18) are delimited partially in pairs, radially to the outside, jointly by at least one of the ribs (7).

13. Cage according to Claim 10, in which each of the circumferential gaps (16) is delimited partially radially to the outside by one of the webs (4) and by one of the ribs (7).

14. Cage according to Claim 1, having a side rim which runs on the circumferential side, the side rim (17) delimiting the ball pockets (3) in the opposite direction to the axial direction.

15. Cage according to Claim 14, in which the smallest radial spacing of the side rim (17) from the rotational axis (2) of the cage (1) is greater than the greatest radial spacing of the side walls (5) from the rotational axis (2).

## Revendications

1. Cage (1) destinée à un roulement à billes à contact oblique (9), comprenant, sur la périphérie, des cavités de billes (3) adjacentes les unes aux autres autour d'un axe de rotation (2) de la cage (1), lesquelles sont limitées sur la périphérie par des nervures (4) et la cage (1) présentant des nez de retenue (10) élastiquement flexibles pour la fixation axiale de la cage (1) dans une rainure annulaire (13) d'une bague interne (11), chacun des nez de retenue (10) faisant saillie hors de l'une des parois latérales (5), **caractérisée en ce que** des flancs périphériques (14) des nez de retenue adjacents (10) s'étendent de manière inclinée les uns par rapport aux autres et **en ce que** la cage (1) est pourvue au niveau d'un côté frontal (4a) entre les parois latérales cintrées (5) de cavités de billes (3) adjacentes, d'une membrure respective (7) orientée sur la périphérie, les membrures (7) formant, conjointement avec les parois latérales (5), un assemblage garantissant la solidité.

2. Cage selon la revendication 1, dans laquelle les flancs (14) tournés l'un vers l'autre sur la périphérie sont inclinés par rapport à un plan imaginaire (15) partant de l'axe de rotation et orienté dans le même sens que l'axe de rotation (2).

3. Cage selon la revendication 1, dans laquelle les flancs (14) sont des surfaces planes tournées vers des espaces vides périphériques (16), les surfaces étant inclinées d'un angle de 30° par rapport à un plan imaginaire (15) partant de l'axe de rotation (2) et orienté dans le même sens que l'axe de rotation (2).

4. Cage selon la revendication 1, 2 ou 3, dans laquelle la distance périphérique de flancs (14) tournés l'un de l'autre au niveau d'un espace vide périphérique (16), de nez de retenue (10) adjacents l'un à l'autre, augmente dans la direction de l'axe de rotation (2).

5. Cage selon la revendication 1, dans laquelle les cavités de billes (3) sont limitées dans au moins une direction axiale de la cage (1) à chaque fois par une paroi latérale (5) d'épaisseur de paroi approximativement uniforme.

6. Cage selon la revendication 5, dans laquelle les parois latérales (5) sont cintrées au moins dans la direction axiale à partir des nervures (4), et de ce fait des espaces vides (6) sont réalisés entre les parois latérales (5) saillant au-delà de la nervure (4) et adjacentes sur la périphérie.

7. Cage selon la revendication 6, dans laquelle les nez de retenue (10) font saillie au maximum dans la direction axiale dans la même mesure que les parois latérales (5) font saillie au maximum depuis la nervure (4) dans la direction axiale.

8. Cage selon la revendication 6, comprenant des rainures (18), l'épaisseur de paroi des parois latérales (5) étant réduite à chaque fois au moyen d'une des rainures (18) respectives, et chacune des rainures (18) étant dans ce cas limitée dans la direction de l'axe de rotation (2) par l'un des nez de retenue (10) et du côté de la cavité de bille (3) par l'une des parois latérales (5).

9. Cage selon la revendication 8, dans laquelle la rainure (18), considérée en coupe longitudinale le long de l'axe de rotation (2) de la cage (1), est décrite par un rayon.

10. Cage selon la revendication 6, comprenant des membrures (7) dans la direction périphérique entre deux des parois latérales (5), chacune des membrures (7) partant dans la direction axiale à chaque fois de l'une des nervures (4) et reliant entre elles du côté de la périphérie à chaque fois deux des parois latérales (5).

11. Cage selon la revendication 10, dans laquelle chacune des rainures (18) est limitée radialement vers l'extérieur en partie par l'une des parois latérales (5) et par deux des membrures (7) séparées l'une de l'autre au moyen de l'une des parois latérales (5).

12. Cage selon la revendication 10, dans laquelle les rainures (18) sont limitées en partie par paire radialement vers l'extérieur en commun par au moins l'une des membrures (7).

13. Cage selon la revendication 10, dans laquelle chacun des espaces vides périphériques (16) est limité radialement vers l'extérieur en partie par l'une des nervures (4) et par l'une des membrures (7).

14. Cage selon la revendication 1, comprenant un bord latéral s'étendant tout autour de la périphérie, le bord latéral (17) limitant les cavités de billes (3) dans le sens opposé à la direction axiale.

15. Cage selon la revendication 14, dans laquelle la plus petite distance radiale du bord latéral (17) à l'axe de rotation (2) de la cage (1) est plus grande que la plus grande distance radiale des parois latérales (5) à l'axe de rotation (2).
